**Europäisches Patentamt**

**European Patent Office**

**Office européen des brevets**

(19)

(11) Veröffentlichungsnummer: **0 211 188 B1**

(12) # EUROPÄISCHE PATENTSCHRIFT

(45) Veröffentlichungstag der Patentschrift:
05.04.89

(21) Anmeldenummer: **86108004.2**

(22) Anmeldetag: **12.06.86**

(51) Int. Cl.⁴: **B23Q 11/08**

(54) **Abdeckeinrichtung.**

(30) Priorität: **26.06.85 DE 3522887**

(43) Veröffentlichungstag der Anmeldung:
**25.02.87 Patentblatt 87/9**

(45) Bekanntmachung des Hinweises auf die Patenterteilung:
**05.04.89 Patentblatt 89/14**

(84) Benannte Vertragsstaaten:
**CH DE FR GB LI**

(56) Entgegenhaltungen:
**DD-A- 88 445**
**DE-B- 1 552 349**
**GB-A- 2 159 737**

(73) Patentinhaber: **Gebr. Hennig GmbH, Dorfstrasse 41, D-8045 Ismaning(DE)**

(72) Erfinder: **Hennig, Kurt, Georgensteinstrasse 16, D-8000 München 71(DE)**

(74) Vertreter: **Tetzner, Volkmar, Dr.-Ing. Dr. jur., Van-Gogh-Strasse 3, D-8000 München 71(DE)**

## Beschreibung

Die Erfindung betrifft eine Abdeckeinrichtung entsprechend dem Oberbegriff des Anspruches 1.

Bei den bisher bekannten Abdeckeinrichtungen (wie Teleskopabdeckungen, Jalousieabdeckungen und dergleichen) hintergreifen die einzelnen Abdeckelemente im allgemeinen eine horizontale Führungsbahn oder einen vertikalen Ständer einer Werkzeugmaschine und sind durch diesen Hintergriff sowohl miteinander als auch mit dem ortsfesten Maschinenteil verbunden.

Bedingt durch diesen notwendigen Hintergriff ist die Montage und Demontage dieser bekannten Abdeckeinrichtung verhältnismäßig kompliziert.

Durch die DE-B 1 552 349 ist ferner eine Abdeckeinrichtung bekannt, bei der die sich überlappenden Abdeckelemente im Bereich ihrer vorderen und rückwärtigen Kante mit quer zur Bewegungsrichtung angeordneten Sperrleisten versehen sind und bei der auf der Unterseite der Abdeckelemente parallel zu ihrer Bewegungsrichtung unterschnittene Führungsleisten vorgesehen sind, die durch Durchbrüche der Sperrleisten des jeweils oberen Abdeckelementes gleiten.

Der Erfindung liegt die Aufgabe zugrunde, eine Abdeckeinrichtung der im Oberbegriff des Anspruches 1 vorausgesetzten Art so auszubilden, daß eine besonders einfache Montage und Demontage möglich ist.

Diese Aufgabe wird erfindungsgemäß durch die kennzeichnenden Merkmale des Anspruches 1 gelöst.

Zweckmäßige Ausgestaltungen der Erfindung sind Gegenstand der Unteransprüche.

Ein Ausführungsbeispiel der Erfindung ist in der Zeichnung veranschaulicht. Es zeigen

Fig. 1 einen horizontalen Teilschnitt durch zwei Abdeckkästen einer in vertikaler Richtung beweglichen Teleskopabdeckung,

Fig. 2 eine Aufsicht auf den äußeren Abdeckkasten gemäß Fig. 1,

Fig 3 einen Schnitt längs der Linie III–III der Fig. 2,

Fig. 4 eine Ansicht des Abdeckkastens gemäß Fig. 2 von vorn,

Fig. 5 eine Schnittdarstellung (längs der Linie V–V der Fig. 4) während der ersten Phase der Herstellung der Nut,

Fig. 6 einen Schnitt entsprechend Fig. 5 während der zweiten Phase der Herstellung der Nut.

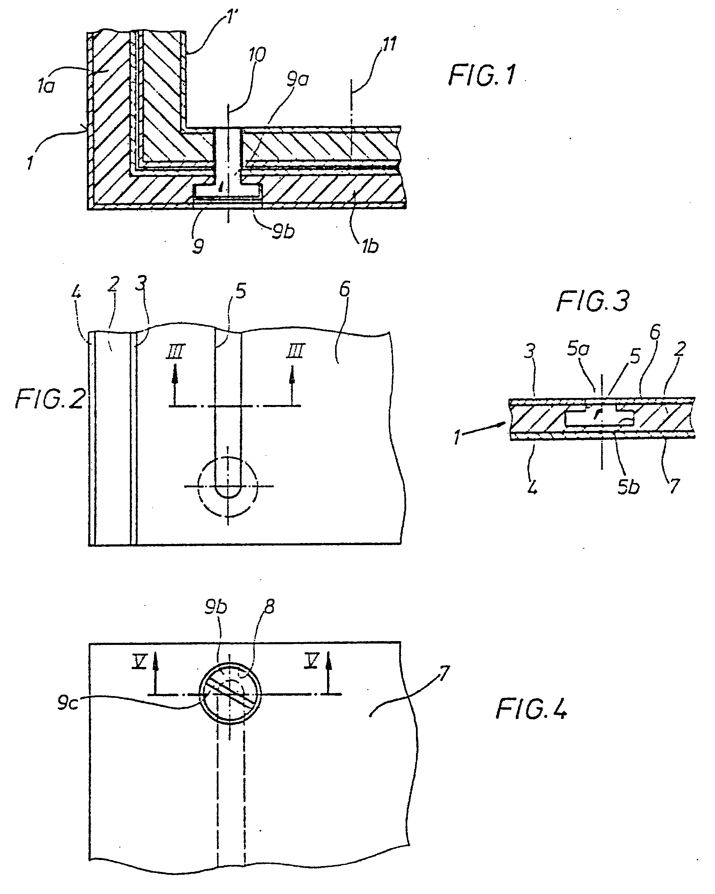

Die dargestellte Teleskopabdeckung enthält eine Anzahl von Abdeckkästen, von denen in Fig. 1 lediglich zwei Abdeckkästen 1 und 1' teilweise veranschaulicht sind. Die Abdeckkästen 1, 1' sind senkrecht zur Zeichenebene der Fig. 1 relativ zueinander beweglich.

Im folgenden sei zunächst der Aufbau des Abdeckkastens 1 näher erläutert. Seine Wandung besteht aus einer inneren Kunststoffschicht 2 und zwei äußeren metallischen Deckschichten 3 und 4. Die beiden seitlichen Schenkel 1a des Abdeckkastens 1 sind gegenüber der Deckwand 1b abgewinkelt, so daß sich ein U-förmiges Querschnittsprofil des Abdeckkastens ergibt.

Der Abdeckkasten 1 enthält zwei in Bewegungsrichtung (d.h. senkrecht zur Zeichenebene der Fig. 1) verlaufende Nuten 5, von denen in der Zeichnung nur die in der Nähe des linken Schenkels 1a befindliche Nut sichtbar ist.

Diese Nut 5 ist in ihrer ganzen Länge nach der Innenseite 6 des Abdeckelementes 1 offen. Mit der Außenseite 7 steht die Nut 5 nur über eine Öffnung 8 am einen Nutende in Verbindung.

In ihrem an die Innenseite 6 angrenzenden nutäußeren Bereich 5a ist die Breite der Nut 5 kleiner als in ihrem nutinneren Bereich 5b (vgl. Fig. 3). Es ergibt sich damit ein etwa T-förmiges Querschnittsprofil der Nut 5.

Der benachbarte Abdeckkasten 1' ist mit einem als Schraube ausgebildeten Führungselement 9 versehen, das mit seinem Schaftteil 9a durch den verengten, nutäußeren Bereich 5a der Nut 5 des Abdeckkastens 1 hindurchgreift und mit seinem verbreiterten Kopfteil 9b in den nutinneren Bereich 5b der Nut 5 formschlüssig eingreift.

Ein zweites Führungselement 9 ist im Bereich der nicht dargestellten zweiten Längsseite des Abdeckkastens 1' angebracht und greift in entsprechender Weise in die zweite Nut 5 des Abdeckkastens 1 ein.

Die bereits erwähnte Öffnung 8 an der Außenseite 7 des Abdeckkastens 1 ist mindestens so groß wie der Kopfteil 9b des Führungselementes 9. Das Führungselement 9 läßt sich daher durch die Öffnung 8 von der Außenseite 7 des Abdeckkastens 1 her einführen und mit dem Abdeckkasten 1' verschrauben. Im vollständig zusammengeschobenen Zustand der beiden Abdeckkästen 1, 1' (vgl. Fig. 4) befindet sich ferner der Kopfteil 9b des Führungselementes 9 genau unter der Öffnung 8, so daß sich das Führungselement 9 mittels eines in den Schlitz 9c des Kopfteiles 9b eingreifenden Schraubenziehers herausschrauben läßt. Nach dem Herausschrauben der beiden Führungselemente 9 läßt sich der Abdeckkasten 1' abnehmen.

Nach dem Abnehmen des Abdeckkastens 1 sind dann die Führungselemente 9 zugänglich, die den Abdeckkasten 1' mit dem nächstkleineren Abdeckkasten verbinden. Auf diese Weise läßt sich die Montage und Demontage der ganzen Teleskopabdeckung auf sehr einfache Weise durchführen. Vorteilhaft ist insbesondere, daß alle Arbeitsgänge von vorn bzw. oben, d.h. von der bequem zugänglichen Außenseite der Teleskopabdeckung durchgeführt werden können. Es entfällt damit das bei den bekannten Ausführungen erforderliche komplizierte Montieren und Demontieren von Hintergriffsteilen im Bereich der seitlichen Schenkel 1a der einzelnen Abdeckkästen.

Die Öffnungen 8 befinden sich jeweils in dem Bereich der einzelnen Abdeckkästen, der auch im maximal auseinandergezogenen Zustand der Teleskopabdeckung vom jeweils größeren Abdeckkasten überlappt ist. Bei der vollständig montierten Teleskopabdeckung sind daher (sowohl im zusammengeschobenen wie im auseinandergezogenen Zustand) nur die im äußersten (größten) Abdeckkasten vorhandenen Öffnungen 8 sichtbar. Diese können gewünschtenfalls durch einen lösbaren Stopfen verschlossen werden, um ein Eindringen von Schmutz und Fremdkörpern in das Innere der Teleskopabdeckung zu verhindern.

Die Nuten 5 benachbarter Abdeckkästen sind dabei quer zur Bewegungsrichtung gegeneinander versetzt. So ist in Fig. 1 die Mittellinie der Nut 5 des äußeren Abdeckkastens 1 mit 10 und die Mittellinie der Nut 5 des benachbarten Abdeckkastens 1' mit 11 bezeichnet.

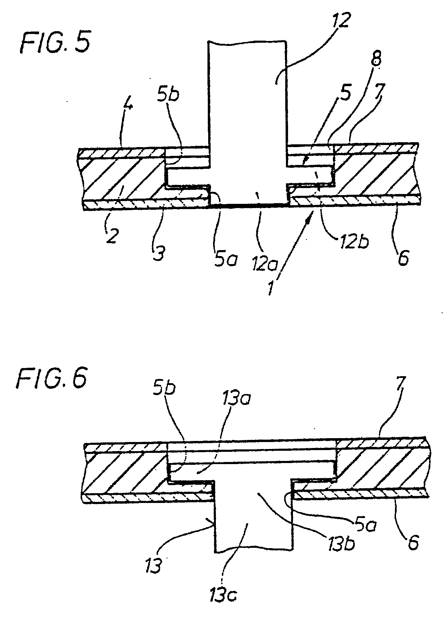

Anhand der Fig. 5 und 6 sei nun die Herstellung der Nut 5 und der Öffnung 8 eines Abdeckkastens im einzelnen erläutert.

Mit einem ersten Fräswerkzeug 12 wird zunächst von der Außenseite 7 des Abdeckkastens 1 her ein bis zur Innenseite 6 reichender Durchbruch erzeugt, dessen Querschnitt in dem an die Innenseite 6 angrenzenden Bereich kleiner als in dem an die Außenseite 7 angrenzenden Bereich ist (vgl. Fig. 5). Das Fräswerkzeug 12 besitzt zu diesem Zweck einen vorderen Teil 12a, der etwa die Breite des nutäußeren Bereiches 5a der herzustellenden Nut 5 besitzt. Weiterhin ist das Fräswerkzeug 12 mit einem erweiterten Teil 12b versehen, dessen Breite der Breite des nutinneren Bereiches 5b der Nut 5 entspricht. Durch diesen erweiterten Teil 12b des Fräswerkzeuges 12 wird zugleich die Öffnung 8 an der Außenseite 7 hergestellt.

Anschließend wird in einem zweiten Arbeitsgang (vgl. Fig. 6) in den so gebildeten Durchbruch von der Außenseite 7 her ein zweites Fräswerkzeug 13 eingeführt, dessen vorderer Teil 13a zum Fräsen des nutinneren Bereiches 5b der Nut 5 dient, dessen anschließender Teil 13b den verengten, nutäußeren Bereich 5a der Nut 5 erzeugt und dessen Schaft 13c über die Innenseite 6 vorsteht.

Durch das Fräswerkzeug 12 wird somit ein Durchbruch geschaffen, durch den dann das für die eigentliche Herstellung der Nut 5 verwendete Fräswerkzeug 13 eingeführt wird.

Im Rahmen der Erfindung sind zahlreiche Abwandlungen möglich.

So müssen die Abdeckkästen nicht aus dem dargestellten Verbundwerkstoff hergestellt werden, sondern können auch einstückig, beispielsweise aus Aluminium oder Kunststoff, gefertigt werden.

Die Erfindung ist ferner nicht auf Teleskopabdeckungen mit Abdeckkästen der veranschaulichten Form beschränkt. Sie kann vielmehr beispielsweise auch bei Jalousieabdeckungen Verwendung finden, die aus einzelnen ebenen Abdeckelementen (ohne abgewinkelte seitliche Schenkel) bestehen.

Bei derartigen Abdeckeinrichtungen, die keine seitlichen Schenkel als zusätzliche Führung bei einer Längsverschiebung der Abdeckelemente enthalten, kann es zur Erzielung einer verkantungsfreien guten Führung vorteilhaft sein, wenn in jede Nut zwei mit Abstand voneinander angeordnete Führungselemente (oder ein längliches Führungselement) eingreifen.

Ein wesentlicher Vorteil der erfindungsgemäßen Abdeckeinrichtung besteht auch darin, daß keine besonderen Elemente, wie Rückwand-Abkantungen, erforderlich sind, um bei der Auszugsbewegung jeweils eine Mitnahme des benachbarten Abdeckelementes zu gewährleisten Bei der erfindungsgemäßen Abdeckeinrichtung erfolgt die Mitnahme durch die Führungselemente, wenn sie mit dem Ende der Nut des benachbarten Abdeckelementes in Anschlag kommen. Die Führungselemente erfüllen damit eine mehrfache Funktion: sie stellen die Verbindung mit dem benachbarten Abdeckelement her (gewährleisten somit den Zusammenhalt der Abdeckeinrichtung), bewirken die Längsführung bei der Auszugsbewegung und sichern schließlich die Mitnahme des jeweils nächsten Kastens.

## Patentansprüche

1. Abdeckeinrichtung, wie Teleskopabdeckung, Jalousieabdeckung oder dergleichen, enthaltend
   a) eine Anzahl von sich wenigstens teilweise überlappenden Abdeckelementen (1, 1'), die jeweils eine Außenseite (7) und eine Innenseite (6) aufweisen und relativ zueinander beweglich sind,
   b) Einrichtungen zum Zusammenhalten und Längsführen der Abdeckelemente, gekennzeichnet durch folgende Merkmale:
   c) an jeder Innenseite (6) der Abdeckelemente (1), die der Außenseite eines benachbarten Abdeckelementes (1') gegenüberliegt, ist wenigstens eine in Bewegungsrichtung verlaufende Nut (5) vorgesehen, die in ihrem an die Innenseite (6) angrenzenden, nutäußeren Bereich (5a) eine kleinere Breite als im nutinneren Bereich (5b) aufweist;
   d) an jeder Außenseite (7), die der Innenseite eines benachbarten Abdeckelementes (1) gegenüberliegt, ist im Überlappungsbereich wenigstens ein zugleich zur Verbindung mit diesem benachbarten Abdeckelement dienendes Führungselement (9) vorgesehen, das mit einem Kopfteil (9b) in den nutinneren Bereich (5b) der Nut dieses benachbarten Abdeckelementes eingreift.

2. Abdeckeinrichtung nach Anspruch 1, gekennzeichnet durch folgendes weiteres Merkmal:
   e) mit der Außenseite (7) des Abdeckelementes (1) steht die Nut (5) über eine zur Montage und Demontage des Führungselementes (9) dienende Öffnung (8) in Verbindung, die mindestens die Größe des Kopfteiles (9b) des Führungselementes (9) aufweist.

3. Abdeckeinrichtung nach Anspruch 2, gekennzeichnet durch folgendes weiteres Merkmal:
   f) die Öffnung (8) befindet sich in dem Bereich des Abdeckelementes (1), der auch im maximal auseinandergezogenen Zustand der Abdeckeinrichtung vom benachbarten Abdeckelement (1') überlappt ist.

4. Abdeckeinrichtung nach Anspruch 1, gekennzeichnet durch folgende weitere Merkmale:
   e) die Abdeckelemente (1, 1') bestehen aus einer inneren Kunststoffschicht (2) und zwei äußeren metallischen Deckschichten (3, 4),
   f) die Nut (5) erstreckt sich durch die eine Deckschicht (4) und wenigstens einen Teil der inneren Kunststoffschicht (2).

5. Abdeckeinrichtung nach Anspruch 1, gekennzeichnet durch folgendes weiteres Merkmal:
   e) die Abdeckelemente sind einstückig, vorzugsweise aus Aluminium oder Kunststoff, hergestellt.

6. Abdeckeinrichtung nach Anspruch 1, gekennzeichnet durch folgendes weiteres Merkmal:

e) jedes Abdeckelement (1, 1') enthält wenigstens zwei Nuten (5), die vorzugsweise in der Nähe der beiden Längsseiten des Abdeckelementes angeordnet sind.

7. Abdeckeinrichtung nach Anspruch 1, gekennzeichnet durch folgendes weiteres Merkmal:

e) die Nuten (5) benachbarter Abdeckelemente (1, 1') sind quer zur Bewegungsrichtung gegeneinander versetzt.

8. Verfahren zur Herstellung einer Abdeckeinrichtung nach Anspruch 2, gekennzeichnet durch folgende Verfahrensschritte:

a) mit einem ersten Fräswerkzeug (12) wird von der Außenseite (7) des Abdeckelementes (1) her ein bis zur Innenseite (6) des Abdeckelementes reichender Durchbruch erzeugt, dessen Querschnitt in dem an die Innenseite (6) angrenzenden Bereich kleiner als in dem an die Außenseite (7) angrenzenden Bereich ist;

b) sodann wird durch diesen Durchbruch von der Außenseite (7) her ein zur Fertigung der Nut (5) dienendes zweites Fräswerkzeug (13) eingeführt, dessen Schaft (13c) über die Innenseite (6) vorsteht.

## Claims

1. Covering device, such as a telescopic cover, louvred cover or the like, containing

a) a plurality of cover elements (1, 1') which at least partially overlap, each have an outer face (7) and an inner face (6) and are movable relative to one another,

b) devices for holding the cover elements together and guiding them longitudinally, characterized by the following features:

c) at least one groove (5) which extends in the direction of movement and has a smaller width in the outer region (5a) adjoining the inner face (6) than in the inner region (5b) is provided on each inner face (6) of the cover elements (1) lying opposite the outer face of an adjacent cover element (1');

d) at least one guide element (9) which at the same time serves for connection to the adjacent cover element (1) and engages with a head part (9b) in the inner region (5b) of the groove of this adjacent cover element is provided on each outer face (7) lying opposite the inner face of the adjacent cover element (1).

2. Covering device as claimed in claim 1, characterized by the following further feature:

e) the groove (5) is connected to the outer face (7) of the cover element (1) by an opening (8) which serves for assembly and disassembly of the guide element (9) and is at least the size of the head part (9b) of the guide element (9).

3. Covering device as claimed in claim 2, characterized by the following further feature:

f) the opening (8) is located in the region of the cover element (1) which in the maximum extended state of the covering device is overlapped by the adjacent cover element (1').

4. Covering device as claimed in claim 1, characterized by the following further features:

e) the cover elements (1, 1') consist of an inner plastic layer (2) and two outer metal coating layers (3, 4),

f) the groove (5) extends through a coating layer (4) and at least a part of the inner plastic layer (2).

5. Covering device as claimed in claim 1, characterized by the following further feature:

e) the cover elements are produced in one piece, preferably from aluminium or plastics material.

6. Covering device as claimed in claim 1, characterized by the following further feature:

e) each cover element (1, 1') contains at least two grooves (5) which are preferably arranged in the proximity of the two long sides of the cover element.

7. Covering device as claimed in claim 1, characterized by the following further feature:

e) the grooves of adjacent cover elements (1, 1') are offset with respect to one another at right angles to the direction of movement.

8. Method of producing a covering device as claimed in claim 2, characterized by the following steps:

a) a hole which extends to the inner face (6) of the cover element and has a smaller cross-section in the region adjoining the inner face (6) than in the region adjoining the outer face (7) is produced from the outer face of the cover element (1) by a first milling tool (12);

b) then a second milling tool which serves for production of the groove (5) and has a shaft which projects over the inner face (6) is inserted through this hole from the outer face (7).

## Revendications

1. Dispositif de recouvrement tel que chape télescopique, chapeau à jalousies ou analogue, comprenant:

a) plusieurs éléments de recouvrement (1, 1') se chevauchant au moins partiellement, dont chacun comprend un côté extérieur (7) et un côté intérieur (6) et qui sont mobiles les uns par rapport aux autres,

b) des organes d'assemblage et de guidage longitudinal des éléments de recouvrement, caractérisé par les particularités suivantes:

c) au moins une gorge (5) orientée dans la direction des déplacements et prévue sur chaque côté intérieur (6) des éléments de recouvrement (1) se trouvant en face du côté extérieur d'un élément de recouvrement voisin (1') comprend une partie extérieure (5a) avoisinant ledit côté intérieur (6) et dont la largeur est plus faible que celle de sa partie intérieure (5b);

d) au moins un élément de guidage (9) est prévu dans la zone de recouvrement sur chaque côté extérieur (7) qui se trouve en face du côté intérieur d'un élément de recouvrement voisin (1), cet élément de guidage (9) étant destiné également à établir la liaison avec ledit élément de recouvrement voisin et comprenant une tête (9b) qui s'engage dans la partie intérieure (5b) de la gorge dudit élément de recouvrement voisin.

2. Dispositif de recouvrement selon la revendication 1, caractérisé de plus par la particularité suivante:

e) la gorge (5) communique avec le côté extérieur (7) de l'élément de recouvrement (1) par un trou (8) destiné au montage et au démontage de l'élément de guidage (9) et ayant au moins la grandeur de la tête (9b) dudit élément de guidage (9).

3. Dispositif de recouvrement selon la revendication 2, caractérisé de plus par la particularité suivante:

f) le trou (8) se trouve dans la partie de l'élément de recouvrement (1) que chevauche aussi l'élément de recouvrement voisin (1') lorsque le dispositif de recouvrement est à l'état de déploiement maximal.

4. Dispositif de recouvrement selon la revendication 1, caractérisé de plus par les particularités suivantes:

e) les éléments de recouvrement (1, 1') se composent d'une couche intérieure de matière synthétique (2) et de deux couches de couverture extérieures métalliques (3, 4),

f) la gorge (5) passe à travers une couche de couverture (4) et se prolonge dans au moins une partie de la couche intérieure de matière synthétique (2).

5. Dispositif de recouvrement selon la revendication 1, caractérisé de plus par la particularité suivante:

e) les éléments de recouvrement sont en une pièce, de préférence en aluminium ou en matière plastique.

6. Dispositif de recouvrement selon la revendication 1, caractérisé de plus par la particularité suivante:

e) chaque élément de recouvrement (1, 1') comporte au moins deux gorges (5) situées de préférence au voisinage des deux côtés longitudinaux dudit élément.

7. Dispositif de recouvrement selon la revendication 1, caractérisé de plus par la particularité suivante:

e) les gorges (5) des éléments de recouvrement voisins (1, 1') sont décalées les unes par rapport aux autres perpendiculairement à la direction des déplacements.

8. Procédé de réalisation d'un dispositif de recouvrement selon la revendication 2, caractérisé par les passes suivantes:

a) un passage atteignant le côté intérieur (6) de l'élément de recouvrement est réalisé à l'aide d'une première fraise (12) par le côté extérieur (7) dudit élément de recouvrement (1), la section de cette fraise étant plus petite dans sa partie avoisinant le côté intérieur (6) que dans sa partie avoisinant ledit côté extérieur (7);

b) une seconde fraise (13) destinée à la finition de la gorge (5) et dont la tige (13c) ressort du côté intérieur (6) est introduite dans ledit passage par le côté extérieur (7).

*FIG.1*

*FIG.2*

*FIG.3*

*FIG.4*

*FIG. 5*

*FIG. 6*